# EUROPEAN PATENT APPLICATION

(11) **EP 3 010 118 A2**
(43) Date of publication of application: **20.04.2016**
(21) Application number: 15189455.7
(22) Date of filing: 13.10.2015
(51) Int. Cl.: H02K 3/34, H02K 1/14

(54) **STATOR OF ROTARY ELECTRIC MACHINE**

(30) Priority: 16.10.2014 JP 2014211987
(71) Applicant: Toyota Jidosha Kabushiki Kaisha, Toyota-shi, Aichi-ken 471-8571 (JP)
(72) Inventor: HATTORI, Hiroyuki, Toyota-shi, Aichi-ken,, 471-8571 (JP); WAKAMATSU, Shinji, Toyota-shi, Aichi-ken,, 471-8571 (JP)
(74) Representative: Winter, Brandl, Fürniss, Hübner, Röss, Kaiser, Polte - Partnerschaft mbB

(57) **Abstract**

A reinforcement component (40) includes a ring part (43) extending in a circumferential direction of a stator, and a plurality of protrusions (44) arranged to be spaced from each other in the circumferential direction of the stator and each protruding beyond the ring part (43). Each of the protrusions (44) of the reinforcement component (40) is fixed between inner circumferential flanges (33) of insulators (30) adjacent in the circumferential direction of the stator. A plurality of teeth (24) are connected with each other throughout a full circumference of the stator by means of the ring part (43) of the reinforcement component 40, so that the ring rigidity of the stator can be improved.

## Description

### BACKGROUND OF THE INVENTION

### 1. Field of the Invention

The invention relates to a stator of a rotary electric machine, and in particular to a stator in which a plurality of teeth are arranged to be spaced from each other in a circumferential direction.

### 2. Description of Related Art

In a stator of a rotary electric machine in Japanese Patent Application Publication No. 2003-259592 (JP 2003-259592 A), support members for tooth tips made of a non-magnetic conductor are embedded and fixed between the tooth tips adjacent in a circumferential direction. Thereby, it is possible to reduce the vibration and noise of the stator.

In JP 2003-259592 A, the support members embedded between the respective tooth tips are separated from each other, therefore, support members are respectively embedded between the respective tooth tips, which is not only time-consuming, but also cannot sufficiently improve the rigidity of the stator, so it is desired to further improve the rigidity of the stator.

### SUMMARY OF THE INVENTION

An object of the invention is to improve the rigidity of the stator with a simple construction.

A stator of a rotary electric machine, of one aspect of the invention, comprises a stator core, insulators, coils and a reinforcement component, the stator core including an annular yoke extending in a circumferential direction and a plurality of teeth arranged to be spaced from each other in the circumferential direction and each protruding to a radial inner side of the yoke, the insulators being fitted to the respective teeth, the coils being wound around the respective teeth across the insulators, and the reinforcement component including a ring part extending in the circumferential direction and a plurality of protrusions arranged to be spaced from each other in the circumferential direction and each protruding beyond the ring part, wherein the protrusions of the reinforcement component are fixed between radial inner ends of the insulators adjacent in the circumferential direction or between radial inner ends of the teeth adjacent in the circumferential direction.

In the aspect of the invention, the ring part may be located at an outer side of the teeth in an axial direction, and may be located at an inner side of the insulators and the coils in a radial direction.

According to the above aspect of the invention, the plurality of teeth are connected with each other throughout a full circumference of the stator by means of the ring part of the reinforcement component, whereby the rigidity of the stator can be improved with a simple construction.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view showing a structural example of a stator according to an embodiment of the invention viewed from an axial direction;
FIG. 2 is a view showing a structural example of the stator according to the embodiment of the invention viewed from a radial inner side;
FIG. 3 is a view showing a structural example of the stator according to the embodiment of the invention viewed from an axial direction;
FIG. 4 is a view showing a structural example of the stator according to the embodiment of the invention viewed from a radial inner side;
FIG. 5 is a view showing a structural example of a reinforcement component 40;
FIG. 6 is a view showing another structural example of a reinforcement component 40;
FIG. 7 is a view showing another structural example of the stator according to the embodiment of the invention viewed from an axial direction;
FIG. 8 is a view showing another structural example of the stator according to the embodiment of the invention viewed from a radial inner side;
FIG. 9 is a view showing another structural example of the stator according to the embodiment of the invention viewed form an axial direction; and
FIG. 10 is a view showing another structural example of the stator according to the embodiment of the invention viewed from a radial inner side.

### DETAILED DESCRIPTION OF EMBODIMENTS

Hereinafter, a mode for carrying out the invention (hereinafter, referred to as embodiment) will be described with reference to the attached drawings.

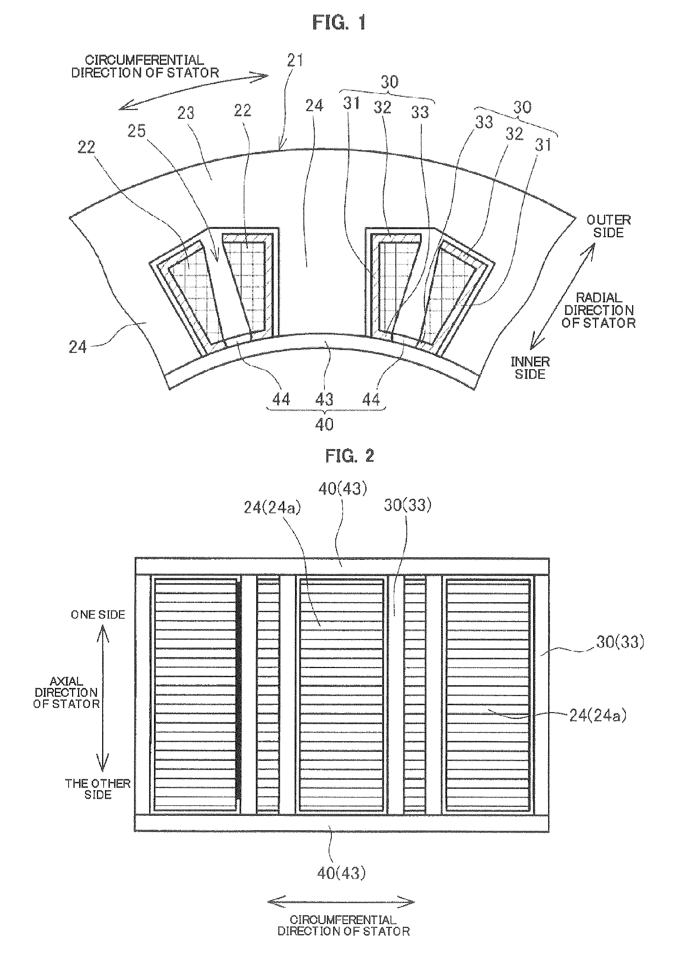

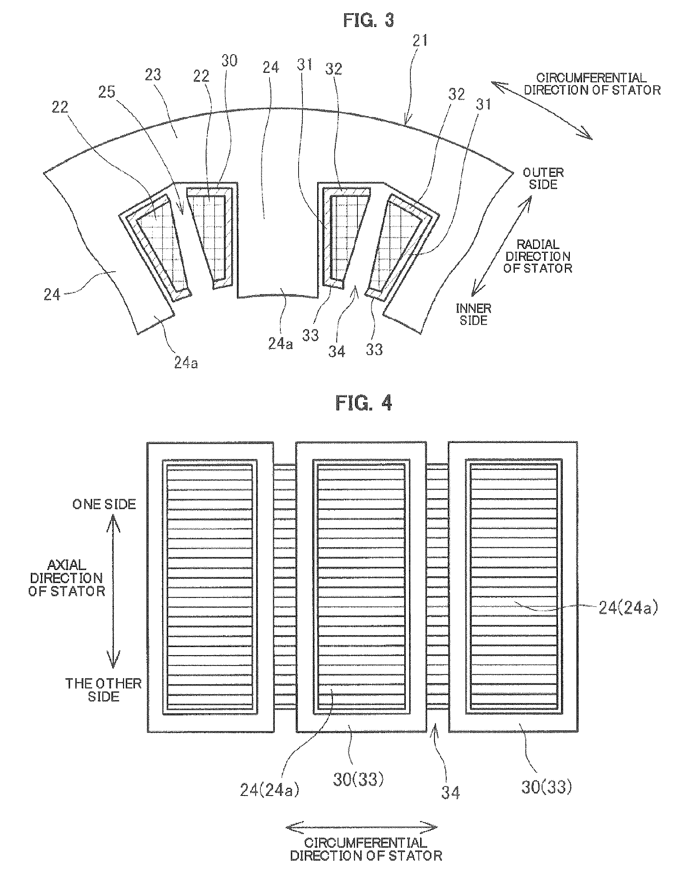

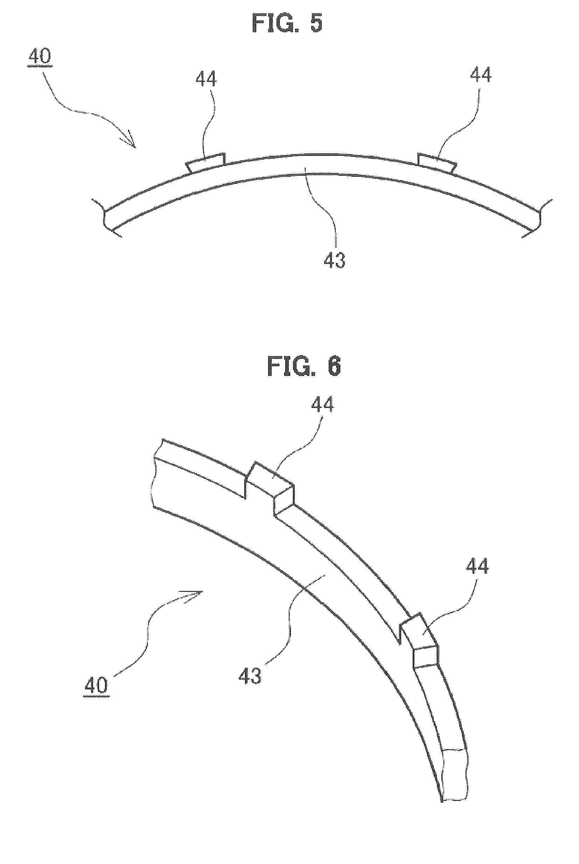

FIG. 1 to FIG. 5 are views showing the schematic structure of a stator of a rotary electric machine according to the embodiment of the invention. FIG. 1 and FIG. 3 show structural examples of the stator viewed from an axial direction, FIG. 2 and FIG. 4 show structural examples of the stator viewed from a radial inner side, and FIG. 5 shows a structural example of a reinforcement component 40. FIG. 3 and FIG. 4 show the state before the reinforcement component 40 is mounted, and FIG. 1 and FIG. 2 show the state after the reinforcement component 40 is mounted. In FIG. 1 to FIG. 5, a portion of the structure with respect to a circumferential direction of the stator is shown, and the structure of the remaining portion which is not illustrated is identical with the illustrated portion.

The stator is constructed as including a stator core 21, coils 22 wound around the stator core 21, and insulators 30 for electrical insulation between the stator core 21 and the coils 22. The stator core 21 includes an annular yoke 23 extending in the circumferential direction of the stator and a plurality of teeth 24 each protruding to the radial inner side of the stator farther than the yoke 23. The plurality of teeth 24 are arranged to be spaced from each other in the circumferential direction of the stator at an interval (at regular intervals). Slots 25 are respectively formed between the teeth 24 adjacent in the circumferential direction of the stator, and a plurality of slots 25 are arranged to be spaced from each other in the circumferential direction of the stator at an interval (at regular intervals). Each of the teeth 24 and each of the slots 25 extend in the axial direction of the stator.

The insulators 30 are fitted to the respective teeth 24, and the coils 22 are wound around the respective teeth 24 across the insulators 30 through the slots 25. As the insulators 30, a material of non-magnetic with an electrical insulation property, such as a resin or the like, is employed. The insulators 30 each includes a fitted part 31 fitted to a tooth 24 and interposed between the tooth 24 and a coil 22, an outer circumferential flange 32 connected to an end of the fitted part 31 at a radial outer side of the stator, and an inner circumferential flange 33 connected to an end of the fitted part 31 at the radial inner side of the stator. The outer circumferential flange 32, which corresponds to an end of the insulator 30 at the radial outer side of the stator, protrudes to both side of the fitted part 31 in the axial direction of the stator and to both sides of the fitted part 31 in the circumferential direction of the stator, so as to be located at an outer side of the coil 22 and be interposed between the coil 22 and the yoke 23 in a radial direction of the stator. The inner circumferential flange 33, which corresponds to an end of the insulator 30 at the radial inner side of the stator, protrudes to both sides of the fitted part 31 in the axial direction of the stator and to both sides of the fitted part 31 in the circumferential direction of the stator, so as to be opposite to the coil 22 while being located at inner side of the coil 22 in the radial direction of the stator. A gap 34 is formed between the inner circumferential flanges 33 adjacent in the circumferential direction of the stator. A tip 24a (an end at the inner side in the radial direction of the stator) of the tooth 24 is located at the inner side of the inner circumferential flange 33 in the radial direction of the stator.

In a multi-pole rotary electric machine, the thickness of the yoke 23 in the radial direction of the stator tends to become thinner, and the ring rigidity of the stator tends to decrease. Therefore, in the present embodiment, a pair of reinforcement components 40 are provided to improve the ring rigidity of the stator. As the reinforcement components 40, a material of non-magnetic with an electrical insulation property, such as a resin or the like, is used. Each of the reinforcement components 40 includes an annular ring part 43 extending in the circumferential direction of the stator and a plurality of protrusions 44 (the number of which is the same as that of the teeth 24) protruding to the outer side of the ring part 43 in the radial direction of the stator. The plurality of protrusions 44 are arranged so as to be spaced from each other in the circumferential direction of the stator at an interval (at regular intervals). The radius of the ring part 43 is equal to (or approximately equal to) the distance from a central axis of the stator to the tip 24a of the respective tooth, the interval at which the adjacent protrusions 44 are spaced from each other in the circumferential direction of the stator is equal to (or approximately equal to) the interval at which the adjacent teeth 24 are spaced from each other in the circumferential direction of the stator, and the width of each of the protrusions 44 in the circumferential direction of the stator is equal to (or approximately equal to) the width of the gap 34 between the adjacent inner circumferential flanges 33 in the circumferential direction of the stator.

The respective protrusions 44 of the pair of the reinforcement components 40 are fixed so as to be embedded in the gaps 34 between the inner circumferential flanges 33 (the ends of the insulators 30 at the radial inner side of the stator) adjacent in the circumferential direction of the stator. In the example shown in FIG. 1 and FIG. 2, the respective protrusions 44 are fixed between the ends of the adjacent inner circumferential flanges 33 in the axial direction of the stator (between the ends at one side and between the ends at the other side). Thus, the reinforcement components 40 are fixed at both ends of the stator in the axial direction. When fixing the reinforcement components 40, the respective protrusions 44 are embedded into the gaps 34 between the adjacent inner circumferential flanges 33 (between the ends in the axial direction of the stator) in the axial direction of the stator. After the reinforcement components 40 are fixed, the pair of ring parts 43 are located at the outer side (at one side and at the other side) of the teeth 24 in the axial direction of the stator, so as to be opposite to the tooth tips 24a while sandwiching the tooth tips 24a. In the radial direction of the stator, the pair of the ring parts 43 are located at the inner side of the coils 22 (the ends of the coils protruding to the outer side of the teeth 24 in the axial direction of the stator) and insulators 30 (the inner circumferential flanges 33), and are opposite to the inner circumferential flanges 33.

According to the embodiment illustrated above, the tooth tips 24a are connected with each other throughout the full circumference of the stator by means of the reinforcement components 40 (ring parts 43) across the insulators 30 (the inner circumferential flanges 33). Thus, as compared with a case where separate components are respectively embedded between the respective inner circumferential flanges 33, it is possible to improve the rigidity of the radial inner ends of the stator. At this time, only by means of one reinforcement component 40, it is possible to achieve fixation between the respective inner circumferential flanges 33 throughout the full circumference of the stator, so that the productivity of the stator can be improved. As a result, it is possible to improve the ring rigidity of the stator with a simple construction, and it is possible to reduce the vibration and noise of the stator. At this time, the reinforcement component 40 will not influence the fill factor of the slots 25 and the magnetic path of the stator core 21, and will not cause a loss of the rotary electric machine or a deterioration of the output performance. Further, it is possible to prevent the insulators 30 and the coils 22 from moving towards the inner side in the radial direction of the stator by means of the reinforcement components 40.

In the above embodiment, in the reinforcement component 40, the respective protrusions 44 are provided to protrude to the outer side of the ring part 43 in the radial direction of the stator. However, in the present embodiment, for example, as shown in FIG. 6, in the reinforcement component 40, the respective protrusions 44 may protrude beyond the ring part 43 in the axial direction of the stator. In this case, it is also possible to improve the ring rigidity of the stator with a simple construction.

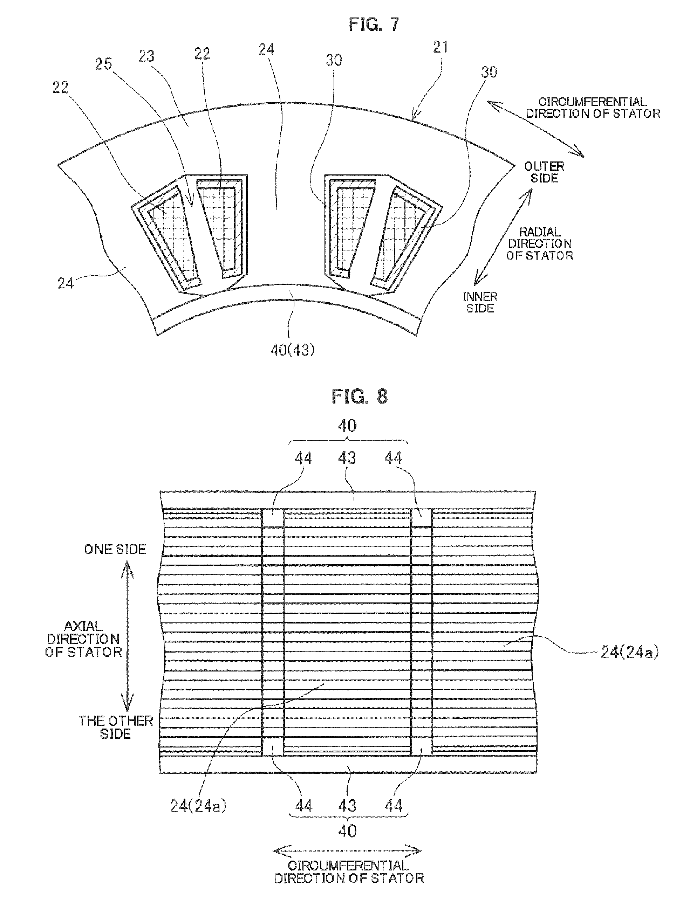

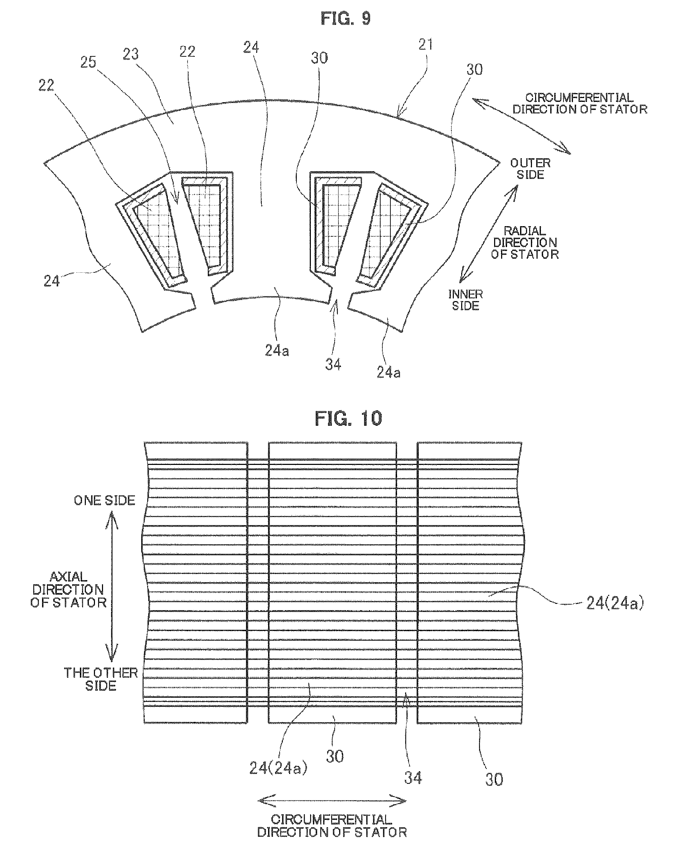

In addition, in the present embodiment, for example, as shown in FIG. 7 to FIG. 10, the respective protrusions 44 of the reinforcement component 40 may be fixed between the tips 24a (the ends at the inner side in the radial direction of the stator) of the teeth 24 adjacent in the circumferential direction of the stator. FIG. 9 and FIG. 10 show the state before the reinforcement component 40 is mounted, and FIG. 7 and FIG. 8 show the state after the reinforcement component 40 is mounted. In the example shown in FIG. 7 to FIG. 10, the tips 24a of the respective teeth 24 are each formed with a bevel portion which protrudes farther to both sides in the circumferential direction of the stator than other portion of the teeth 24, and a gap 34 is formed between the tooth tips (bevel parts) 24a adjacent in the circumferential direction of the stator. In the pair of reinforcement components 40, as shown in FIG. 6, the respective protrusions 44 protrude beyond the ring part 43 in the axial direction of the stator, and the width of each of the protrusions 44 in the circumferential direction of the stator is equal to (or approximately equal to) the width of the gap 34 between the adjacent tooth tips 24a in the circumferential direction of the stator. Each of the protrusions 44 is fixed between the ends of the adjacent tooth tips 24a in the axial direction of the stator (between the ends at one side and between the ends at the other side). After the reinforcement component 40 is fixed, the pair of the ring parts 43 are located at the outer side (one side and the other side) of the teeth 24 in the axial direction of the stator, so as to be opposite to the tooth tips 24a while sandwiching the tooth tips 24a. In the radial direction of the stator, the pair of ring parts 43 are located at the inner side of the coils 22 (the ends of the coils) and the insulators 30, and are opposite to the insulators 30. In the structural example shown in FIG. 7 to FIG. 10, it is also possible to improve the ring rigidity of the stator with a simple construction. Further, it is also possible to prevent the insulators 30 and the coils 22 from moving towards the inner side in the radial direction of the stator by means of the reinforcement components 40.

While the mode for carrying out the invention has been described above, the invention is not limited to these embodiments in any way, and can indubitably be implemented in various ways without departing from the scope of the invention.

## Claims

1. A stator of a rotary electric machine, comprising:
a stator core (21) that includes an annular yoke (23) extending in a circumferential direction and a plurality of teeth (24) arranged to be spaced from each other in the circumferential direction and each protruding to a radial inner side of the yoke (23);
insulators (30) that are fitted to the respective teeth (24);
coils (22) that are wound around the respective teeth (24) across the respective insulators (30); and
a reinforcement component (40) that includes a ring part (43) extending in the circumferential direction and a plurality of protrusions (44) arranged to be spaced from each other in the circumferential direction and each protruding beyond the ring part (43),
wherein the protrusions (44) of the reinforcement component (40) are fixed between radial inner ends of the insulators (30) adjacent in the circumferential direction, or between radial inner ends of the teeth (24) adjacent in the circumferential direction.

2. The stator according to claim 1, wherein the ring part (43) is located at an outer side of the teeth (24) in an axial direction, and is located at an inner side of the insulators (30) and the coils (22) in a radial direction.

3. The stator according to claim 1, wherein the protrusions (44) are provided to protrude to an outer side of the ring part (43) in an radial direction of the stator.

4. The stator according to claim 1, wherein the protrusions (44) are provided to protrude beyond the ring part (43) in an axial direction of the stator.

5. The stator according to claim 1, wherein:
the radial inner ends of the teeth (24) are each formed with a bevel portion (24a) which protrudes farther to both sides in the circumferential direction of the stator than other portion of the teeth; and
the protrusions (44) of the reinforcement component (40) are fixed between radial inner ends of the teeth (24) adjacent in the circumferential direction.

6. The stator according to claim 1, wherein the reinforcement component (40) is made of a material of non-magnetic with an electrical insulation property.
